# EUROPÄISCHE PATENTSCHRIFT

(11) **EP 3 802 232 B1**
(45) Veröffentlichungstag und Bekanntmachung des Hinweises auf die Patenterteilung: **30.03.2022**
(21) Anmeldenummer: 19728608.1
(22) Anmeldetag: 28.05.2019
(51) Int. Cl.: B60R 21/231, B60R 21/2338

(54) **GASSACK ZUR RÜCKHALTUNG EINES FAHRZEUGINSASSEN, VERFAHREN ZU DESSEN HERSTELLUNG SOWIE GASSACKMODUL MIT EINEM SOLCHEN GASSACK**
AIRBAG FOR RESTRAINING A VEHICLE OCCUPANT, METHOD FOR THE PRODUCTION THEREOF, AND AIRBAG MODULE COMPRISING SUCH AN AIRBAG
COUSSIN À GAZ POUR RETENIR UN OCCUPANT D'UN VÉHICULE, PROCÉDÉ POUR SA FABRICATION ET MODULE DE COUSSIN À GAZ COMPRENANT UN TEL COUSSIN À GAZ

(30) Priorität: 11.06.2018 DE 102018113881
(43) Veröffentlichungstag der Anmeldung: 14.04.2021
(73) Patentinhaber: ZF Automotive Safety Germany GmbH, 63743 Aschaffenburg (DE)
(72) Erfinder: SCHÜTZ, Dominik, 63872 Heimbuchenthal (DE); OHNISHI, Nobuyuki, Yokohama-shi Kanagawa prefecture (JP)
(74) Vertreter: ZF Patentabteilung - DIPS
(86) Internationale Anmeldenummer: PCT/EP2019/063740
(87) Internationale Veröffentlichungsnummer: WO 2019/238407

(56) Entgegenhaltungen:
- DE-U1- 20 102 115
- JP-A- 2011 093 336
- US-A1- 2018 111 581

## Beschreibung

Die Erfindung betrifft einen Gassack zur Rückhaltung eines Fahrzeuginsassen in einem Kraftfahrzeug, ein Verfahren zu dessen Herstellung sowie ein Gassackmodul mit einem solchen Gassack.

Zur Verbesserung der Insassensicherheit werden bereits seit geraumer Zeit Gassackmodule als Rückhaltevorrichtungen in Fahrzeugen eingesetzt. Besonders weit verbreitet sind inzwischen sogenannte Frontairbags, welche sich im Crashfall als Luftkissen vor dem Fahrzeuginsassen entfalten und einen Aufprall des Insassen, insbesondere des Insassenkopfes dämpfen.

In manchen Fällen trifft der Fahrzeuginsasse dabei allerdings nicht exakt frontal, sondern schräg auf den Gassack, was unter Umständen zu einer unerwünscht starken und für den Insassen unkomfortablen Drehbewegung des Kopfes führen kann.

Die JP 2011 093336 A zeigt einen Gassack mit einem aufblasbaren Hauptkörper und wenigstens zwei zylindrischen Gassackabschnitten, welche mit dem Hauptkörper in Strömungsverbindung stehen und in einem entfalteten Gassackzustand einem Fahrzeuginsassen zugewandt sind.

Aufgabe der Erfindung ist es, einen Gassack zu schaffen, der auch bei einem Schrägaufprall des Fahrzeuginsassen eine möglichst optimale und komfortable Rückhaltewirkung bereitstellt sowie insbesondere eine Drehbewegung des Insassenkopfes minimiert.

Erfindungsgemäß wird diese Aufgabe gelöst durch einen Gassack zur Rückhaltung eines Fahrzeuginsassen in einem Kraftfahrzeug, mit einem aufblasbaren Kissenabschnitt zur Dämpfung eines Insassenaufpralls und zwei im eingebauten Zustand des Gassacks seitlich gegenüberliegenden, aufblasbaren Schlauchabschnitten, die insassenseitig auf dem Kissenabschnitt angeordnet sind, wobei die Schlauchabschnitte durch eine insassenseitig auf dem Kissenabschnitt angeordnete Gleitlage miteinander verbunden und zumindest abschnittsweise relativ zum Kissenabschnitt seitlich verschieblich sind. Aufgrund der geringen Reibung zwischen dem Kissenabschnitt und der Gleitlage bzw. den Schlauchabschnitten führt eine seitliche Kraftkomponente des Fahrzeuginsassen beim Schrägaufprall zu einem seitlichen Gleiten des Insassenkopfes mitsamt Gleitlage und Schlauchabschnitten auf dem Kissenabschnitt, wobei dieses Gleiten einer Verdrehung des Kopfes entgegenwirkt. Die aufblasbaren seitlichen Schlauchabschnitte begrenzen die Prallfläche und bilden darüber hinaus eine seitliche Stütze, welche ebenfalls einer Verdrehung des Kopfes entgegenwirkt. Folglich wird eine Drehbewegung des Insassenkopfes beim Schrägaufprall durch seitliches Gleiten und/oder Abstützen des Kopfes auf ein akzeptables Maß reduziert.

In einer Ausführungsform des Gassacks stehen die Schlauchabschnitte in Strömungsverbindung mit dem Kissenabschnitt. Auf diese Weise lassen sich die Schlauchabschnitte unkompliziert über den Kissenabschnitt mit Generatorgas befüllen. Ein zum Aufblasen des Gassacks vorgesehener Gasgenerator muss daher lediglich etwas größer dimensioniert werden. Ein separater, ausschließlich zur Befüllung der Schlauchabschnitte dienender Gasgenerator ist dementsprechend nicht notwendig, was sich vorteilhaft auf den benötigten Bauraum, die Komplexität und die Kosten des Gassackmoduls auswirkt.

Vorzugsweise geht die Gleitlage einstückig in wenigstens einen der Schlauchabschnitte über. Dies vereinfacht die Gassackkonstruktion und trägt damit zu einem geringen Herstellungsaufwand bei.

Gemäß einer weiteren Ausführungsform des Gassacks erstrecken sich die Schlauchabschnitte jeweils entlang einer Schlauchlängsachse von einem ersten axialen Ende, an dem sie in Strömungsverbindung mit dem Kissenabschnitt stehen, bis zu einem entgegengesetzten, zweiten axialen Ende. Aufgrund ihrer linearen Geometrie bilden die Schlauchabschnitte unabhängig von der Größe des Insassen eine seitliche Stütze, die zuverlässig eine übermäßige Verdrehung des Insassenkopfes verhindert.

Die Schlauchabschnitte können in dieser Ausführungsform an ihrem zweiten axialen Ende fest mit dem Kissenabschnitt verbunden, insbesondere vernäht sein. Dadurch lässt sich beim Schrägaufprall eine seitliche Bewegungsmöglichkeit des Insassenkopfes relativ zum Kissenabschnitt mit geringem Aufwand begrenzen.

Vorzugsweise ist jeder Schlauchabschnitt zumindest zwischen seinen beiden axialen Enden relativ zum Kissenabschnitt in einer Richtung quer zur Schlauchlängsachse verschieblich, um eine seitliche Bewegung des Insassenkopfes beim Schrägaufprall zu ermöglichen. Im Falle einer Strömungsverbindung sind die aufblasbaren Schlauchabschnitte auch an ihrem ersten axialen Ende mit dem Kissenabschnitt verbunden, sodass eine seitliche Bewegung des Kopfes durch eine Verformung der Schlauchabschnitte zwischen den beiden axialen Enden zustande kommt. Ferner kann sich durch die Beanspruchung beim Schrägaufprall auch eine Verformung des Kissenabschnitts im Bereich der Verbindung mit den ersten und zweiten axialen Enden der Schlauchabschnitte ergeben, woraus ebenfalls eine seitliche Bewegungsmöglichkeit des Kopfes resultiert.

Alternativ oder zusätzlich zu den zweiten axialen Enden der Schlauchabschnitte kann die Gleitlage im Bereich zwischen den zweiten axialen Enden der Schlauchabschnitte fest mit dem Kissenabschnitt verbunden, insbesondere vernäht sein. Auch auf diese Weise lässt sich beim Schrägaufprall eine seitliche Bewegungsmöglichkeit des Insassenkopfes relativ zum Kissenabschnitt mit geringem Aufwand begrenzen.

Gemäß einer weiteren Ausführungsform des Gassacks weist die Gleitlage wenigstens einen Schlitz, bevorzugt mehrere Schlitze auf, wobei sich die Schlitze insbesondere im Wesentlichen parallel zur Schlauchlängsachse erstrecken. Durch die Länge und Anzahl der Schlitze kann die Kopplung der gegenüberliegenden Schlauchabschnitte gezielt eingestellt werden. So ist bei ungeschlitzter Gleitlage nur eine gemeinsame seitliche Bewegung der Schlauchabschnitte möglich, wohingegen bei stark geschlitzter Gleitlage eine seitliche Bewegung eines Schlauchabschnitts im Extremfall komplett durch ein seitliches Auseinanderziehen der Schlitzränder kompensiert wird, ohne dass eine seitliche Bewegung des gegenüberliegenden Schlauchabschnitts stattfindet. Folglich lässt sich auf diese Weise ein gewünschter seitlicher Gleitwiderstand mit geringem Aufwand beeinflussen.

Vorzugsweise sind der Kissenabschnitt, die Schlauchabschnitte sowie die Gleitlage aus maximal zwei separaten Gewebezuschnitten gebildet. Dies führt zu einem besonders einfachen Aufbau des Gassacks, sodass sich dieser mit geringem Aufwand herstellen lässt.

Der Kissenabschnitt weist bevorzugt einen Gassackmund zur Befüllung des Gassacks mit Generatorgas auf.

Die Erfindung betrifft im Übrigen auch ein Gassackmodul mit einem Gasgenerator und einem oben beschriebenen Gassack, wobei der Gasgenerator an den Kissenabschnitt des Gassacks angeschlossen ist und die Schlauchabschnitte über den Kissenabschnitt mit Generatorgas befüllbar sind. Somit wird zunächst der zur Dämpfung des Insassenaufpralls wichtige Kissenabschnitt aufgeblasen. Erst anschließend werden dann über den Kissenabschnitt die Schlauchabschnitte befüllt, um eine übermäßige Drehbewegung des Insassenkopfes zu verhindern.

Schließlich betrifft die Erfindung auch ein Verfahren zum Herstellen eines Gassacks, insbesondere eines oben beschriebenen Gassacks, wobei das Verfahren folgende Schritte umfasst:
a) Es werden zwei längliche, insbesondere ovale Gewebelagen aufeinander gelegt und so miteinander verbunden, insbesondere vernäht, dass bei etwa mittiger Teilung der Gewebelagen quer zu ihrer Längsrichtung auf einer ersten Hälfte der Gewebelagen ein aufblasbarer Kissenabschnitt und auf einer zweiten Hälfte der Gewebelagen zwei jeweils mit dem aufblasbaren Kissenabschnitt in Strömungsverbindung stehende, aufblasbare Schlauchabschnitte sowie eine in Querrichtung zwischen den beiden Schlauchabschnitten liegende Gleitlage entstehen;
b) die Gewebelagen werden entlang einer quer zur Längsrichtung verlaufenden Faltkante so umgeklappt, dass die Schlauchabschnitte und die Gleitlage auf dem Kissenabschnitt zu liegen kommen;
c) die Schlauchabschnitte und/oder die Gleitlage werden mit dem Kissenabschnitt des Gassacks an einem von der Faltkante entgegengesetzten Rand fest verbunden, insbesondere vernäht.

Die länglichen Gewebelagen können dabei einstückig ausgeführt sein oder aus zwei separaten Gewebezuschnitten bestehen. In jedem Fall umfasst der Gassack sehr wenige Einzelteile und lässt sich dementsprechend mit geringem Aufwand herstellen. Die beiden länglichen Gewebelagen sind vorzugsweise etwa doppelt so lang wie breit, sodass sich nach dem Umklappen in Schritt b) ein geometrisches Gebilde ergibt, dessen Länge und Breite sich in etwa entsprechen. Damit ist die spätere Entfaltungsform vergleichbar mit herkömmlichen Gassäcken, insbesondere mit im Wesentlichen runden Fahrer-Frontairbags.

Weitere Merkmale und Vorteile der Erfindung ergeben sich aus der nachfolgenden Beschreibung einer bevorzugten Ausführungsform unter Bezugnahme auf die Zeichnungen. In diesen zeigt:
- Figur 1 eine schematische Skizze eines aufgeblasenen, herkömmlichen Gassacks beim Schrägaufprall eines Fahrzeuginsassen;
- Figur 2 eine schematische Skizze eines erfindungsgemäßen Gassackmoduls mit einem aufgeblasenen, erfindungsgemäßen Gassack beim Schrägaufprall eines Fahrzeuginsassen;
- Figur 3 eine Draufsicht des Gassacks gemäß Figur 2 während seiner Herstellung in einem Zwischenzustand; und
- Figur 4 eine Draufsicht des Gassacks gemäß Figur 3 in einem fertiggestellten Endzustand.

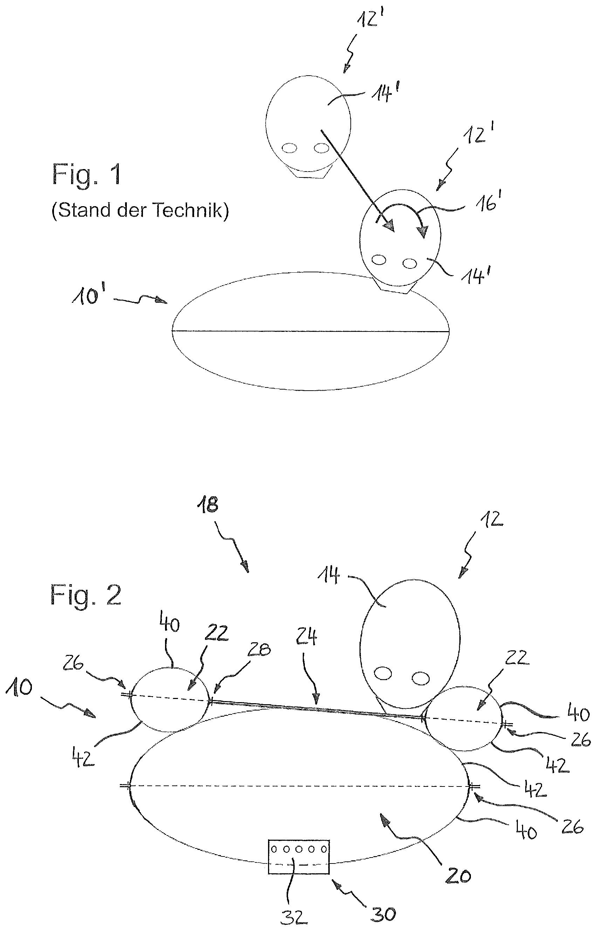

Die Figur 1 zeigt einen herkömmlichen Gassack 10' bei einem Schrägaufprall eines Fahrzeuginsassen 12'. Der Kopf 14' des Fahrzeuginsassen 12' wird hierbei schräg zu einer Oberfläche des Gassacks 10' beschleunigt und trifft außermittig auf den Gassack 10' auf. Infolge der Beschleunigungskomponente parallel zur Gassackoberfläche erfährt der Kopf 14' nach dem Auftreffen auf den Gassack 10' eine Rotation, was in Figur 1 durch einen Pfeil 16'angedeutet ist. Eine resultierende Verdrehung im Bereich der Halswirbelsäule ist für den Fahrzeuginsassen 12' unkomfortabel und sollte daher auf ein möglichst geringes Maß reduziert werden.

Demgegenüber ist in der Figur 2 ein Gassackmodul 18 mit einem erfindungsgemäßen Gassack 10 bei einem Schrägaufprall des Insassen 12 dargestellt.

Dieser Gassack 10 zur Rückhaltung des Fahrzeuginsassen 12 in einem Kraftfahrzeug umfasst einen aufblasbaren Kissenabschnitt 20 zur Dämpfung eines Insassenaufpralls, wie er von herkömmlichen Gassäcken bekannt ist, sowie ferner zwei im eingebauten Zustand des Gassacks 10 seitlich gegenüberliegende, aufblasbare Schlauchabschnitte 22, die insassenseitig auf dem Kissenabschnitt 20 angeordnet sind, wobei die Schlauchabschnitte 22 durch eine insassenseitig auf dem Kissenabschnitt 20 angeordnete Gleitlage 24 miteinander verbunden und zumindest abschnittsweise relativ zum Kissenabschnitt 20 seitlich verschieblich sind.

Folglich kann bei einem Schrägaufprall des Fahrzeuginsassen 12 dessen Kopf 14 zusammen mit der Gleitlage 24 seitlich auf dem Kissenabschnitt 20 gleiten, wodurch sich die Kopfrotation und damit eine Drehbewegung im Halsbereich des Insassen in vorteilhafter Weise verringert. Ferner kann der Kopf 14 seitlich durch einen der Schlauchabschnitte 22 gestützt werden, was ebenfalls zu einer verringerten Drehbewegung des Kopfes 14 beiträgt.

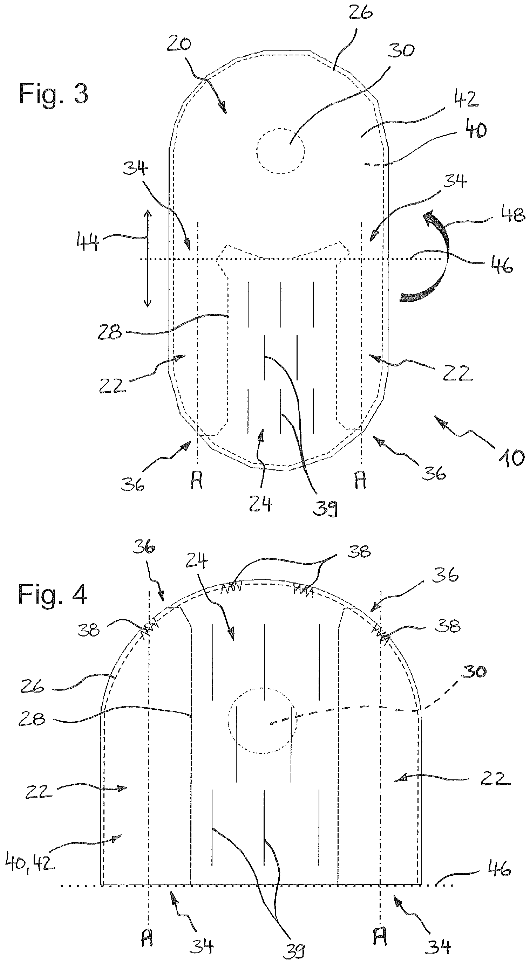

In den Figuren 3 und 4 ist jeweils eine Draufsicht des entfalteten, aber nicht aufgeblasenen Gassacks 10 dargestellt, wobei die Figur 3 den Gassack 10 während seiner Herstellung in einem Zwischenzustand und die Figur 4 den fertiggestellten Gassack 10 in einem Endzustand zeigt.

Gemäß Figur 3 ist der Gassack 10 aus zwei separaten, länglichen Gewebezuschnitten gebildet, die aufeinandergelegt und durch eine randseitig umlaufende Naht 26 sowie eine weitere Naht 28 verbunden sind, um den Kissenabschnitt 20, die Schlauchabschnitte 22 sowie die Gleitlage 24 zu definieren.

Die Schlauchabschnitte 22 gehen hierbei einstückig in die Gleitlage 24 über und stehen mit dem Kissenabschnitt 20 in Strömungsverbindung, wobei der Kissenabschnitt 20 einen Gassackmund 30 zur Befüllung des Gassacks 10 mit Generatorgas aufweist.

Wie in Figur 2 angedeutet umfasst das Gassackmodul 18 neben dem Gassack 10 auch einen Gasgenerator 32, welcher an den Gassackmund 30 des Kissenabschnitts 20 angeschlossen ist und bei einer Aktivierung des Gassackmoduls 18 die Schlauchabschnitte 22 über den Kissenabschnitt 20 mit Generatorgas befüllt.

Die Schlauchabschnitte 22 erstrecken sich jeweils entlang einer Schlauchlängsachse A von einem ersten axialen Ende 34, an dem sie in Strömungsverbindung mit dem Kissenabschnitt 20 stehen, bis zu einem entgegengesetzten zweiten axialen Ende 36.

Im fertiggestellten Zustand des Gassacks 10 gemäß Figur 4 sind die Schlauchabschnitte 22 zumindest zwischen ihren jeweiligen axialen Enden 34, 36 relativ zum Kissenabschnitt 20 in einer Richtung quer zur Schlauchlängsachse A verschieblich.

Um die seitliche Verschiebung der Schlauchabschnitte 22 zu begrenzen, ist der Kissenabschnitt 20 vorzugsweise fest mit den zweiten axialen Enden 36 der Schlauchabschnitte 22 und/oder mit der Gleitlage 24 im Bereich zwischen den zweiten axialen Enden 36 der Schlauchabschnitte 22 verbunden, insbesondere vernäht.

Im Ausführungsbeispiel gemäß Figur 4 sind im Bereich der randseitigen Naht 26 des Gassacks 10 mehrere kurze Nahtabschnitte 38 angedeutet, welche sowohl die zweiten axialen Enden 36 der Schlauchabschnitte 22 als auch die Gleitlage 24 zwischen den zweiten axialen Enden 36 mit dem Kissenabschnitt 20 verbinden.

Wie in den Figuren 3 und 4 dargestellt, weist die Gleitlage 24 des Gassacks 10 mehrere Schlitze 39 auf, die sich im Wesentlichen parallel zur Schlauchlängsachse A erstrecken. Über die Länge und Anzahl der Schlitze 39 lässt sich die Kopplung der gegenüberliegenden Schlauchabschnitte 22 gezielt beeinflussen und dadurch ein gewünschter seitlicher Gleitwiderstand mit geringem Aufwand einstellen.

Nachfolgend wird noch kurz auf die Herstellung des Gassacks 10 eingegangen.

In einem Schritt a) werden zunächst zwei längliche, ovale Gewebelagen 40, 42 aufeinandergelegt und so miteinander vernäht, dass bei etwa mittiger Teilung der Gewebelagen 40, 42 quer zu ihrer Längsrichtung 44 auf einer ersten Hälfte der Gewebelagen 40, 42 der aufblasbare Kissenabschnitt 20 und auf einer zweiten Hälfte der Gewebelagen 40, 42 die beiden jeweils mit dem aufblasbaren Kissenabschnitt 20 in Strömungsverbindung stehenden, aufblasbaren Schlauchabschnitte 22 sowie die in Querrichtung zwischen den beiden Schlauchabschnitten 22 angeordnete Gleitlage 24 entstehen (siehe Figur 3).

Die Gewebelagen 40, 42 sind hier aus zwei separaten, identischen Gewebezuschnitten gebildet, wobei alternativ aber auch eine einstückige Ausführung der Gewebelagen 40, 42 denkbar ist.

Die Gleitlage 24 ist in diesem Fall eine aus beiden Gewebelagen 40, 42 bestehende "Doppellage". Dies ist für das oben beschriebene seitliche Gleiten des Insassenkopfes 14 bei einem Schrägaufprall nicht unbedingt notwendig, sodass alternativ eine der beiden Gewebelagen 40, 42 im Bereich der Gleitlage 24 ausgeschnitten sein kann und die Gleitlage 24 dementsprechend nur durch die andere Gewebelage 40, 42 gebildet wird. Hierbei stehen dem Nachteil unterschiedlicher Gewebezuschnitte für den Gassack 10 dann vorteilhafte Einsparungen bei Material, Gewicht und Bauraum gegenüber.

In einem nachfolgenden Schritt b) des Herstellungsverfahrens für den Gassack 10 werden die Gewebelagen 40, 42 entlang einer quer zur Längsrichtung 44 verlaufenden Faltkante 46 so umgeklappt, dass die Schlauchabschnitte 22 und die Gleitlage 24 auf dem Kissenabschnitt 20 zu liegen kommen.

Dies ist in Figur 3 durch einen Pfeil 48 angedeutet und im Ergebnis in Figur 4 zu sehen. Länge und Breite des fertigen Gassacks 10 sind vorzugsweise in etwa gleich groß, sodass die länglichen Gewebelagen 40, 42 ursprünglich etwa doppelt so lang wie breit sind.

Schließlich werden die Schlauchabschnitte 22 und/oder die Gleitlage 24 mit dem Kissenabschnitt 20 des Gassacks 10 an einem von der Faltkante 46 entgegengesetzten Rand fest verbunden, insbesondere vernäht.

Der oben beschriebene Gassack 10 ist im vorliegenden Ausführungsbeispiel ein fahrerseitiger Frontgassack, lässt sich aber durch geringfügige Anpassungen auch problemlos als Frontgassack auf der Beifahrerseite einsetzen. In jedem Fall ergibt sich durch den Gassack 10 eine verbesserte und für den Fahrzeuginsassen komfortablere Rückhaltewirkung beim Schrägaufprall.

## Patentansprüche

1. Gassack zur Rückhaltung eines Fahrzeuginsassen (12) in einem Kraftfahrzeug, mit
einem aufblasbaren Kissenabschnitt (20) zur Dämpfung eines Insassenaufpralls und
zwei im eingebauten Zustand des Gassacks (10) seitlich gegenüberliegenden, aufblasbaren Schlauchabschnitten (22), die insassenseitig auf dem Kissenabschnitt (20) angeordnet sind,
**dadurch gekennzeichnet, dass** die Schlauchabschnitte (22) durch eine insassenseitig auf dem Kissenabschnitt (20) angeordnete Gleitlage (24) miteinander verbunden und zumindest abschnittsweise relativ zum Kissenabschnitt (18) seitlich verschieblich sind.

2. Gassack nach Anspruch 1, **dadurch gekennzeichnet, dass** die Schlauchabschnitte (22) in Strömungsverbindung mit dem Kissenabschnitt (18) stehen.

3. Gassack nach wenigstens einem der vorhergehenden Ansprüche, **dadurch gekennzeichnet, dass** die Gleitlage (24) einstückig in wenigstens einen der Schlauchabschnitte (22) übergeht.

4. Gassack nach wenigstens einem der vorhergehenden Ansprüche, **dadurch gekennzeichnet, dass** sich die Schlauchabschnitte (22) jeweils entlang einer Schlauchlängsachse (A) von einem ersten axialen Ende (34), an dem sie in Strömungsverbindung mit dem Kissenabschnitt (20) stehen, bis zu einem entgegengesetzten zweiten axialen Ende (36) erstrecken.

5. Gassack nach Anspruch 4, **dadurch gekennzeichnet, dass** die Schlauchabschnitte (22) an ihrem zweiten axialen Ende (36) fest mit dem Kissenabschnitt (20) verbunden, insbesondere vernäht sind.

6. Gassack nach Anspruch 4 oder 5, **dadurch gekennzeichnet, dass** jeder Schlauchabschnitt (22) zumindest zwischen seinen beiden axialen Enden (34, 36) relativ zum Kissenabschnitt (20) in einer Richtung quer zur Schlauchlängsachse (A) verschieblich ist.

7. Gassack nach wenigstens einem der Ansprüche 4 bis 6, **dadurch gekennzeichnet, dass** die Gleitlage (24) im Bereich zwischen den zweiten axialen Enden (36) der Schlauchabschnitte (22) fest mit dem Kissenabschnitt (20) verbunden, insbesondere vernäht ist.

8. Gassack nach wenigstens einem der vorhergehenden Ansprüche, **dadurch gekennzeichnet, dass** die Gleitlage (24) wenigstens einen Schlitz (39) aufweist.

9. Gassack nach wenigstens einem der vorhergehenden Ansprüche, **dadurch gekennzeichnet, dass** der Kissenabschnitt (20), die Schlauchabschnitte (22) sowie die Gleitlage (24) aus maximal zwei separaten Gewebezuschnitten gebildet sind.

10. Gassack nach wenigstens einem der vorhergehenden Ansprüche, **dadurch gekennzeichnet, dass** der Kissenabschnitt (20) einen Gassackmund (30) zur Befüllung des Gassacks (10) mit Generatorgas aufweist.

11. Gassackmodul mit einem Gasgenerator (32) und einem Gassack (10) nach einem der vorhergehenden Ansprüche, **dadurch gekennzeichnet, dass** der Gasgenerator (32) an den Kissenabschnitt (20) des Gassacks (10) angeschlossen ist und die Schlauchabschnitte (22) über den Kissenabschnitt (20) mit Generatorgas befüllbar sind.

12. Verfahren zum Herstellen eines Gassacks (10), insbesondere nach wenigstens einem der Ansprüche 1 bis 10, umfassend folgende Schritte:
a) Es werden zwei längliche, insbesondere ovale Gewebelagen (40, 42) aufeinandergelegt und so miteinander verbunden, dass bei etwa mittiger Teilung der Gewebelagen (40, 42) quer zur Längsrichtung (44) auf einer ersten Hälfte der Gewebelagen (40, 42) ein aufblasbarer Kissenabschnitt (20) und auf einer zweiten Hälfte der Gewebelagen (40, 42) zwei jeweils mit dem aufblasbaren Kissenabschnitt (20) in Strömungsverbindung stehende, aufblasbare Schlauchabschnitte (22) sowie eine in Querrichtung zwischen den beiden Schlauchabschnitten (22) liegende Gleitlage (24) entstehen;
b) die Gewebelagen (40, 42) werden entlang einer quer zur Längsrichtung (44) verlaufenden Faltkante (46) so umgeklappt, dass die Schlauchabschnitte (22) und die Gleitlage (24) auf dem Kissenabschnitt (20) zu liegen kommen;
c) die Schlauchabschnitte (22) und/oder die Gleitlage (24) werden mit dem Kissenabschnitt (20) des Gassacks (10) an einem von der Faltkante (46) entgegengesetzten Rand fest verbunden.

## Claims

1. An airbag for restraining a vehicle occupant (12) in an automotive vehicle, comprising
an inflatable cushion portion (20) for damping an occupant impact and
two inflatable tube portions (22) laterally opposed in the mounted state of the airbag (10) which are arranged on the occupant side on the cushion portion (20),
**characterized in that** the tube portions (22) are connected to each other by a slide layer (24) arranged on the occupant side on the cushion portion (20) and are laterally movable at least in portions relative to the cushion portion (18).

2. The airbag according to claim 1, **characterized in that** the tube portions (22) are in fluid communication with the cushion portion (18).

3. The airbag according to at least one of the preceding claims, **characterized in that** the slide layer (24) is integrally transformed to at least one of the tube portions (22).

4. The airbag according to at least one of the preceding claims, **characterized in that** each of the tube portions (22) extends along a longitudinal tube axis (A) from a first axial end (34), where they are in fluid communication with the cushion portion (20), to an opposite second axial end (36).

5. The airbag according to claim 4, **characterized in that** the tube portions (22) are tightly connected, especially stitched, to the cushion portion (20) at their second axial end (36).

6. The airbag according to claim 4 or 5, **characterized in that** each tube portion (22) is at least movable between both axial ends (34, 36) thereof relative to the cushion portion (20) in a direction transverse to the longitudinal tube axis (A).

7. The airbag according to at least one of the claims 4 to 6, **characterized in that** the slide layer (24) is tightly connected, especially stitched, to the cushion portion (20) in the area between the second axial ends (36) of the tube portions (22).

8. The airbag according to at least one of the preceding claims, **characterized in that** the slide layer (24) has at least one slit (39).

9. The airbag according to at least one of the preceding claims, **characterized in that** the cushion portion (20), the tube portions (22) as well as the slide layer (24) are formed of a maximum of two separate fabric cuts.

10. The airbag according to at least one of the preceding claims, **characterized in that** the cushion portion (20) has an airbag orifice (30) for filling the airbag (10) with inflator gas.

11. An airbag module comprising an inflator (32) and an airbag (10) according to any one of the preceding claims, **characterized in that** the inflator (32) is connected to the cushion portion (20) of the airbag (10) and the tube portions (22) can be filled with inflator gas via the cushion portion (20).

12. A method for manufacturing an airbag (10), especially according to at least one of the claims 1 to 10, comprising the following steps:
a) Two elongate, especially oval fabric layers (40, 42) are superimposed and connected to each other so that, with an approximately central partition of the fabric layers (40, 42) transversely to the longitudinal direction (44), on a first half of the fabric layers (40, 42) an inflatable cushion portion (20) is formed and on a second half of the fabric portions (40, 42) two inflatable tube portions (22) each being in fluid communication to the inflatable cushion portion (20) as well as a slide layer (24) located in transverse direction between the two tube portions (22) are formed;
b) the fabric layers (40, 42) are folded along a folding edge (46) extending transversely to the longitudinal direction (44) so that the tube portions (22) and the slide layer (24) come to rest on the cushion portion (20);
c) the tube portions (22) and/or the slide layer (24) are tightly connected to the cushion portion (20) of the airbag (10) at a rim opposed to the folding edge (46).

## Revendications

1. Coussin gonflable pour la retenue d'un occupant (12) dans un véhicule automobile, avec
une portion amortissante du coussin gonflable (20) pour amortir le choc d'un passager et
deux portions de tubes (22) gonflables, opposées latéralement à l'état monté du coussin gonflable (10), qui sont disposées du côté de l'occupant sur la partie du coussin (20),
**caractérisé en ce que** les portions de tubes (22) sont reliées entre elles par une couche de glissement (24) disposée du côté de l'occupant sur la portion amortissante du coussin (20) et sont déplaçables latéralement au moins partiellement par rapport à la portion amortissante du coussin (18).

2. . Coussin gonflable selon la revendication 1, **caractérisé en ce que** les portions de tubes (22) sont reliées en écoulement avec la portion amortissante de coussin (18).

3. Coussin gonflable selon au moins l'une des revendications précédentes, **caractérisé en ce que** la couche de glissement (24) se prolonge en une seule pièce dans au moins l'une des portions de tubes (22).

4. Coussin gonflable selon au moins l'une des revendications précédentes, **caractérisé en ce que** les portions de tubes (22) s'étendent chacune le long d'un axe longitudinal de tube (A) depuis une première extrémité axiale (34), au niveau de laquelle elles sont reliées en écoulement avec la portion amortissante de coussin (20), jusqu'à une deuxième extrémité axiale opposée (36).

5. Coussin gonflable selon la revendication 4, **caractérisé en ce que** les portions de tubes (22) sont solidement reliées, en particulier cousues, à la portion amortissante de coussin (20) à leur deuxième extrémité axiale (36).

6. Coussin gonflable selon la revendication 4 ou 5, **caractérisé en ce que** chaque portion de tube (22) peut être déplacée par rapport à la portion amortissante de coussin (20) au moins entre ses deux extrémités axiales (34, 36) dans une direction transversale à l'axe longitudinal du tube (A).

7. Coussin gonflable selon au moins l'une des revendications 4 à 6, **caractérisé en ce que** la couche de glissement (24) est solidement reliée, en particulier cousue, à la portion amortissante de coussin (20) dans la zone située entre les deux extrémités axiales (36) des portions de tubes (22).

8. Coussin gonflable selon au moins l'une des revendications précédentes, **caractérisé en ce que** la couche de glissement (24) présente au moins une fente (39).

9. Coussin gonflable selon au moins l'une des revendications précédentes, **caractérisé en ce que** la portion amortissante du coussin (20), les portions de tubes (22) ainsi que la couche de glissement (24) sont formées au maximum de deux découpes de tissu séparées.

10. Coussin gonflable selon au moins l'une des revendications précédentes, **caractérisé en ce que** la portion amortissante de coussin (20) présente une embouchure de coussin gonflable (30) pour le remplissage du coussin gonflable (10) par un gaz issu d'un générateur de gaz.

11. Module airbag avec un générateur de gaz (32) et un coussin gonflable (10) selon l'une des revendications précédentes, **caractérisé en ce que** le générateur de gaz (32) est raccordé à la portion amortissante du coussin (20) du coussin gonflable (10) et les portions de tubes (22) peuvent être remplies de gaz issu d'un générateur de gaz par le biais de la portion amortissante du coussin (20).

12. Procédé de fabrication d'un coussin gonflable (10), notamment selon au moins l'une des revendications 1 à 10, comprenant les étapes suivantes :
a) Deux couches de tissu (40, 42) allongées, en particulier ovales, sont posées l'une sur l'autre et reliées entre elles de telle sorte que, lorsque les couches de tissu (40, 42) sont divisées à peu près au milieu, transversalement à la direction longitudinale (44), une première moitié des couches de tissu (40, 42), on obtient une portion amortissante de coussin gonflable (20) et, sur une deuxième moitié des couches de tissu (40, 42), deux portions de tubes gonflables (22) respectivement reliées en écoulement avec la portion amortissante de coussin gonflable (20), ainsi qu'une couche de glissement (24) située dans la direction transversale entre les deux portions de tubes (22) ;
b) les couches de tissu (40, 42) sont rabattues le long d'un bord de pliage (46) s'étendant transversalement à la direction longitudinale (44) de telle sorte que les portions de tubes (22) et la couche de glissement (24) viennent se placer sur la portion amortissante du coussin (20) ;
c) les portions de tubes (22) et/ou la couche de glissement (24) sont reliées solidement à la portion amortissante de coussin (20) du coussin gonflable (10) sur un bord opposé à l'arête de pliage (46).
